(19) **Europäisches Patentamt**
**European Patent Office**
**Office européen des brevets**

(11) **EP 1 514 137 B1**

(12) **FASCICULE DE BREVET EUROPEEN**

(45) Date de publication et mention
de la délivrance du brevet:
**26.03.2008 Bulletin 2008/13**

(21) Numéro de dépôt: **03760722.3**

(22) Date de dépôt: **11.06.2003**

(51) Int Cl.:
**G01V 1/28** (2006.01)      **G01V 1/30** (2006.01)

(86) Numéro de dépôt international:
**PCT/FR2003/001754**

(87) Numéro de publication internationale:
**WO 2004/001449 (31.12.2003 Gazette 2004/01)**

(54) **PROCEDE, DISPOSITIF ET PRODUIT-PROGRAMME POUR DETERMINER LOCALEMENT LA FORME DES HORIZONS GEOLOGIQUES**

VERFAHREN, EINRICHTUNG UND SOFTWAREPAKET ZUR LOKALEN BESTIMMUNG DER FORM GEOLOGISCHER HORIZONTE

METHOD, DEVICE AND SOFTWARE PACKAGE FOR LOCALLY DETERMINING THE SHAPE OF GEOLOGICAL HORIZONS

(84) Etats contractants désignés:
**AT BE BG CH CY CZ DE DK EE ES FI FR GB GR HU IE IT LI LU MC NL PT RO SE SI SK TR**

(30) Priorité: **19.06.2002 FR 0207598**

(43) Date de publication de la demande:
**16.03.2005 Bulletin 2005/11**

(73) Titulaire: **Earth Decisions Sciences
54500 Vandoeuvre-les-Nancy (FR)**

(72) Inventeurs:
• **DULAC, Jean-Claude
Sugarland, TX 77479 (US)**

• **BOSQUET, Fabien
F-54000 Nancy (FR)**
• **LABRUNYE, Emmanuel
F-54000 Nancy (FR)**

(74) Mandataire: **Laget, Jean-Loup et al
Cabinet LOYER
161, rue de Courcelles
75017 Paris (FR)**

(56) Documents cités:
| | |
|---|---|
| US-A- 4 672 546 | US-A- 5 615 171 |
| US-A- 5 930 730 | US-A- 6 138 076 |
| US-A- 6 151 555 | US-A1- 2002 022 930 |

**Description**

L'invention est relative à un procédé pour déterminer localement la forme des horizons géologiques à partir des données obtenues par traitement de mesures sismiques.

L'invention est également relative à un dispositif pour déterminer localement la forme des horizons géologiques à partir de données obtenues par traitement de mesures sismiques.

L'invention est enfin relative à un produit-programme d'ordinateur permettant le fonctionnement d'un dispositif programmable selon l'invention, pour la mise en oeuvre d'un procédé selon l'invention.

Le document US 6 151 555 est relatif à un procédé de traitement de signaux sismiques et à un dispositif pour la détermination d'un cube de valeur de variance. Ce procédé prévoit de calculer pour chaque noeud d'une matrice sismique tridimensionnelle une valeur de variance égale à la variance des amplitudes sismiques au voisinage du noeud considéré. Le voisinage du noeud considéré est un sous-ensemble des noeuds de la matrice tridimensionnelle dont la distance au noeud considéré est inférieure à un seuil choisi. Ce procédé repose sur l'hypothèse que la valeur de variance ainsi définie est importante pour les noeuds proches d'une discontinuité.

Le document WO 99/64896 décrit un procédé d'interprétation de données sismiques, particulièrement adapté pour identifier les limites de réservoirs d'hydrocarbures.

Le document US 5625171 décrit un procédé et un dispositif pour trouver des horizons dans des données sismiques tridimensionnelles, comportant des étapes selon le préambule de la revendication 1.

Un premier but de l'invention est d'améliorer les analyses du profil des horizons géométriques.

Un deuxième but de l'invention est de faciliter la détermination des vecteurs unitaires normaux aux horizons d'un cube sismique tridimensionnel.

Un troisième but de l'invention est de faciliter la détermination d'un indice de courbure des horizons dans un cube sismique tridimensionnel.

L'invention a pour objet un procédé pour déterminer localement la forme des horizons géologiques, selon la revendication 1, dans lequel on construit une fonction continue $S_{ij,k}(t)$ par interpolation ou approximation des traces sismiques discrètes d'une matrice sismique tridimensionnelle, ladite fonction étant désignée comme "trace sismique locale continue", comportant les étapes suivantes :

a). utiliser comme décalage optimal de deux traces sismiques locales continues voisines, la valeur de décalage rendant maximale leur fonction de corrélation ;

b). retenir comme voisinage conditionnel d'une trace sismique locale continue "centrale" $S_{ij,k}(t)$ le sous-voisinage consistant en des traces voisines $S_{pq,k}(t)$ correspondant à des décalages optimaux associés à des corrélations $R_{ij,pq,k}(h)$ supérieures à un seuil prédéterminé compris entre 0 et 1 ; caractérisé par le fait que le procédé comporte en outre les étapes

c). définir pour chaque trace sismique locale continue $S_{pq,k}(t)$ du voisinage conditionnel une valeur de résidu par rapport à ladite trace sismique locale continue "centrale" $S_{ij,k}(t)$ comportant des coefficients paramétriques ;

d). déterminer les coefficients paramétriques par minimisation d'ensemble des résidus sur le voisinage conditionnel.

Selon d'autres caractéristiques de l'invention :

- les valeurs de résidu de l'étape c) sont des valeurs absolues de forme différentielle paramétrique, par exemple $\rho_{ij,pq,k} = |a_{ij,k} \cdot (p-i) + b_{ij,k} \cdot (q-j) - h_{ij,pq,k}|$,

où $a_{ij,k}$ et $b_{ij,k}$ sont les paramètres et $h_{ij,pq,k}$ est le décalage optimal retenu entre la trace sismique locale continue $S_{ij,k}(t)$ "centrale" et une trace sismique locale continue $S_{pq,k}(t)$ voisine,

- la minimisation d'ensemble des résidus $\rho_{ij,pq,k}$ sur le voisinage conditionnel comporte une minimisation d'une somme de puissances des résidus du type suivant

$$C^{\alpha}(i,j,k) = \sum_{p,q} (\rho_{ij,pq,k})^{\alpha} \ ,$$

où $\alpha$ est une puissance supérieure ou égale à 1,

Le cas échéant, chaque terme $(\rho_{ij,pq,k})^{\alpha}$ de cette somme peut être pondérée par un facteur fonction croissante du coefficient de corrélation $P_{ij,pq,k}(h_{ij,pq,k})$.

- les coefficients $a_{ij,k}$ et $b_{ij,k}$ déterminés à l'étape d) sont utilisés pour définir un vecteur unitaire N(i,j,k) de coordonnées $N^x(i,j,k)$, $N^y(i,j,k)$, $N^t(i,j,k)$, par exemple de la forme:

$$N^x(i,j,k) = \frac{a_{ij,k}}{\sqrt{(a_{ij,k})^2 + (b_{ij,k})^2 + 1}}$$

$$N^y(i,j,k) = \frac{b_{ij,k}}{\sqrt{(a_{ij,k})^2 + (b_{ij,k})^2 + 1}}$$

$$N^t(i,j,k) = \frac{1}{\sqrt{(a_{ij,k})^2 + (b_{ij,k})^2 - 1}}$$

et on choisit ce vecteur unitaire comme vecteur unitaire «normal» orthogonal à l'horizon au noeud (i, j, k),

- on utilise l'ensemble des vecteurs unitaires normaux N(i, j, k) pour définir le champ des vecteurs unitaires normaux, en vue de l'affichage sur écran des profils des horizons sismiques,

- on choisit comme indice de courbure une fonction croissante des résidus comportant les coefficients paramétriques déterminés à l'étape d).

L'invention a également pour objet un dispositif selon la revendication 7, pour la mise en oeuvre du procédé selon l'invention, comportant des moyens pour utiliser comme décalage optimal de deux traces sismiques locales continues voisines la valeur de décalage rendant maximale leur fonction de corrélation, des moyens pour retenir comme voisinage conditionnel d'une trace sismique locale continue "centrale" $S_{ij,k}(t)$ le sous-voisinage consistant en des traces voisines $S_{pq,k}(t)$ correspondant à des décalages optimaux associés à des corrélations $R_{ij,p,k}(h)$ supérieures à un seuil édéterminé compris entre 0 et 1 caractérisé par le fait que le dispositif comporte, en outre moyens sismique locale continue $S_{pq,k}(t)$ du voisinage conditionnel une valeur de résidu par rapport à ladite trace sismique locale continue "centrale" $S_{ij,k}(t)$ comportant des coefficients paramétriques et des moyens pour déterminer les coefficients paramétriques par minimisation d'ensemble des résidus sur le voisinage conditionnel.
Selon d'autres caractéristiques de l'invention :

- le dispositif comporte des moyens de mémorisation et des moyens de visualisation de paramètres sismiques déterminés à l'aide du procédé selon l'invention.

L'invention a enfin pour objet un produit-programme d'ordinateur, selon la revendication 9, comportant des éléments de code de programme pour exécuter les étapes d'un procédé selon l'invention, lorsque ledit programme est exécuté par un ordinateur.
L'invention sera mieux comprise grâce à la description qui va suivre donnée à titre d'exemple non limitatif en référence aux dessins annexés dans lesquels :

- La figure 1 représente schématiquement une matrice sismique tridimensionnelle et une trace sismique locale continue.

- La figure 2 représente schématiquement, un exemple de voisinage local $N_{ij,k}$ consistant en un ensemble de trace sismique locale continues $S_{pq,k}(t)$ voisines de la trace centrale de référence $S_{ij,k}(t)$ elle même située a la verticale du géophone $G_{ij}$ et interpolant les amplitudes sismiques autour de t=k.

- La figure 3 représente schématiquement, une section verticale de voisinage local conditionnel $N_{ij,k}(r)$ d'une trace sismique locale continue de référence $S_{ij,k}(t)$.

- La figure 4 représente schématiquement, une section verticale d'une matrice sismique tridimensionnelle avec un décalage optimal $h_{ij,pq,k}$ et un voisinage conditionnel $N_{ij,k}(r)$.

- La figure 5 représente schématiquement, une section verticale d'une matrice sismique tridimensionnelle analogue à la figure 4 avec présence d'une faille ou discontinuité.

- La figure 6 représente schématiquement, un schéma fonctionnel d'un procédé selon l'invention.

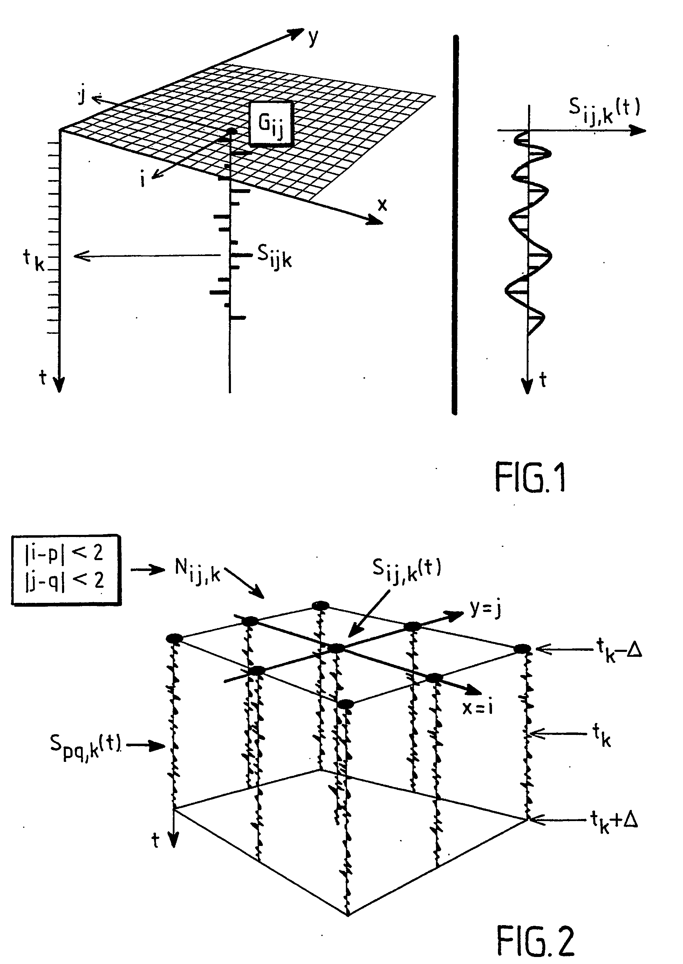

En référence aux figures 1 à 5, les éléments identiques ou fonctionnellement équivalents sont désignés ou repérés de manière identique.

Sur la figure 1, une matrice sismique tridimensionnelle est obtenue par relevé de mesures enregistrées par des géophones $G_{ij}$ disposés sur un réseau x,y en des points de coordonnées i,j. Le relevé des mesures échantillonnées dans le temps est représenté suivant un axe t descendant représentatif de la profondeur ou d'une verticale descendante à partir de la surface de la terre ou de la mer. Les mesures sont caractérisées par leur amplitude, par exemple une amplitude relevée par le géophone $G^{ij}$ au temps ou à la profondeur d'échantillonnage $t_k$. La mesure discrète effectuée par le géophone $G_{ij}$ au temps ou à la profondeur $t_k$ est appelée amplitude sismique $S_{ij,k}$.

L'ensemble des amplitudes sismiques correspondant à un géophone $G_{ij}$ de coordonnées i,j est une matrice unidimensionnelle $(S_{ij1}, S_{ij2},...., S_{ijk},...., S_{ijN})$ appelées trace sismique discrète, car cette matrice unidimensionnelle correspond à la trace selon le point de coordonnées horizontales i,j de la matrice sismique tridimensionnelle obtenue par mesures sismiques.

L'axe vertical t orienté selon une verticale descendante désigne usuellement le temps, mais peut également être traité pour représenté une profondeur à partir de la surface.

L'invention concerne aussi bien l'application à une troisième coordonnée t représentative du temps, qu'à une troisième coordonnée t représentative de la profondeur.

A partir de la trace sismique discrète située à la verticale d'un géophone $G_{ij}$ on définit, par interpolation ou approximation des valeurs discrètes autour de $t=t_k=k$, une fonction continue $S_{ij,k}(t)$ qui est désignée comme "trace sismique locale continue". Les méthodes d'approximation ou d'interpolation de valeurs discrètes pour engendrer une fonction continue sont nombreuses, et comprennent notamment les interpolations ou approximations polynomiales, ainsi que les interpolations ou approximations trigonométriques polynomiales.

Toute autre variante d'interpolation ou d'approximation fournissant une fonction continue peut également être appliquée à la présente invention pour fournir une "trace sismique locale continue".

Sur la figure 2, plusieurs traces sismiques locales continues définissent un exemple de voisinage d'une trace sismique locale continue "centrale" $S_{ij,k}(t)$ de référence. Le voisinage d'une trace sismique locale continue $S_{ij,k}(t)$ est défini comme l'ensemble des traces sismiques locales continues dont les indices spaciaux horizontaux p,q sont voisins des indices spaciaux horizontaux i,j de la trace sismique locale continue de référence.

A titre d'exemple, les coordonnées spatiales horizontales p,q correspondant au géophone Gpq sont voisines des coordonnées spatiales horizontales i, j correspondant au géophone $G_{ij}$ si les valeurs absolues des différences i-p et j-q sont inférieures à des entiers donnés, par exemple à 2.

Dans ce cas, comme représenté à la figure 2, la trace sismique locale continue $S_{ij,k}(t)$ est associée à huit traces sismiques locales continues voisines entourant la trace sismique locale continue "centrale" $S_{ij,k}(t)$.

Dans le cas de traces sismiques locales continues produites par des mesures sismiques, la forme des horizons géologiques introduit des décalages verticaux entre des traces sismiques locales continues voisines. Dans le but de déterminer des relations entre deux traces sismiques continues locales voisines $S_{ij,k}(t)$ et $S_{pq,k}(t)$ centrées sur la même coordonnée verticale d'échantillonnage $t=t_k=k$ et correspondant à des coordonnées spatiales i,j et p,q différentes, on calcule la fonction de corrélation $R_{ij,pq,k}(h)$ des deux traces sismiques locales continues.

La fonction de corrélation de deux traces sismiques locales continues voisines est obtenue par la formule suivante

$$R_{ij,pq,k}(h) = \frac{C_{ij,pq,k}(h)}{\sqrt{C_{ij,ij,k}(0) . C_{pq,pq,k}(0)}}$$

où le numérateur correspond à la fonction de covariance de $S_{ij,k}(t)$ et $S_{pq,k}(t)$ obtenue par l'expression suivante

$$C_{ij,pq,k}(h) \;=\; \int_{tk-\Delta}^{tk+\Delta} S_{ij,k}(t)\,.\, S_{pq,k}(t+h)\,.\,dt\,.$$

Dans cette intégrale définissant $C_{ij,pq,k}(h)$, le paramètre $\Delta$ définit une « fenêtre verticale d'investigation » autour de $t=t_k=k$.

Par exemple, si les traces sismiques locales continues $S_{ij,k}(t)$ et $S_{pq,k}(t)$ sont des polynômes trigonométriques de la forme suivante interpolant les donnés sismiques

$$S_{ij,k}(t) \;=\; \sum_{s=1}^{m} a_s^{ij,k}.\cos(s\omega\,t) + b_s^{ij,k}.\sin(s\omega\,t)$$

$$S_{ij,k}(t) \;=\; \sum_{s=1}^{m} a_s^{ij,k}.\cos(s\omega\,t) + b_s^{ij,k}.\sin(s\omega\,t)$$

alors on peut montrer que la fonction de covariance $C_{ij,pq,k}(h)$ est elle même un polynôme trigonométrique de la forme suivante où les coefficients $A_s^{ij,pq,k}$ et $B_s^{ij,pq,k}$ dépendent des coefficients $a_s^{ij,k}$, $a_s^{pq,k}$, $b_s^{ij,k}$ et $b_s^{pq,k}$ :

$$C_{ij,pq,k}(h) \;=\; \sum_{s=1}^{m} A_s^{ij,pq,k}.\cos(s\omega\,h) + B_s^{ij,pq,k}.\sin(s\omega\,h)$$

Un résultat mathématique classique et connu est que la fonction de corrélation

$$R_{ij,pq,k}(h) \;=\; \frac{C_{ij,pq,k}(h)}{\sqrt{C_{ij,ij,k}(0).C_{pq,pq,k}(0)}}$$

traduit une similarité des fonctions corrélées lorsque cette fonction de corrélation se rapproche de 1.

L'étude des fonctions de corrélation des traces sismiques locales continues $S_{ij,k}(t)$ et $S_{pq,k}(t)$ permet de définir comme décalage optimal la valeur $h_{ij,pq,k}$ de h correspondant au maximum de la fonction de corrélation $R_{ij,pqk}(h)$, c'est-à-dire au maximum de la fonction de corrélation le plus proche de 1. Contrairement à l'art existant basé sur une formulation discrète de la fonction de corrélation $R_{ij,pq,k}(h)$, l'utilisation d'une formulation continue des traces sismiques et donc de la fonction de corrélation permet d'obtenir un décalage optimum qui n'est pas contraint à être un multiple entier du pas d'échantillonnage suivant l'axe vertical correspondant à la variable t.

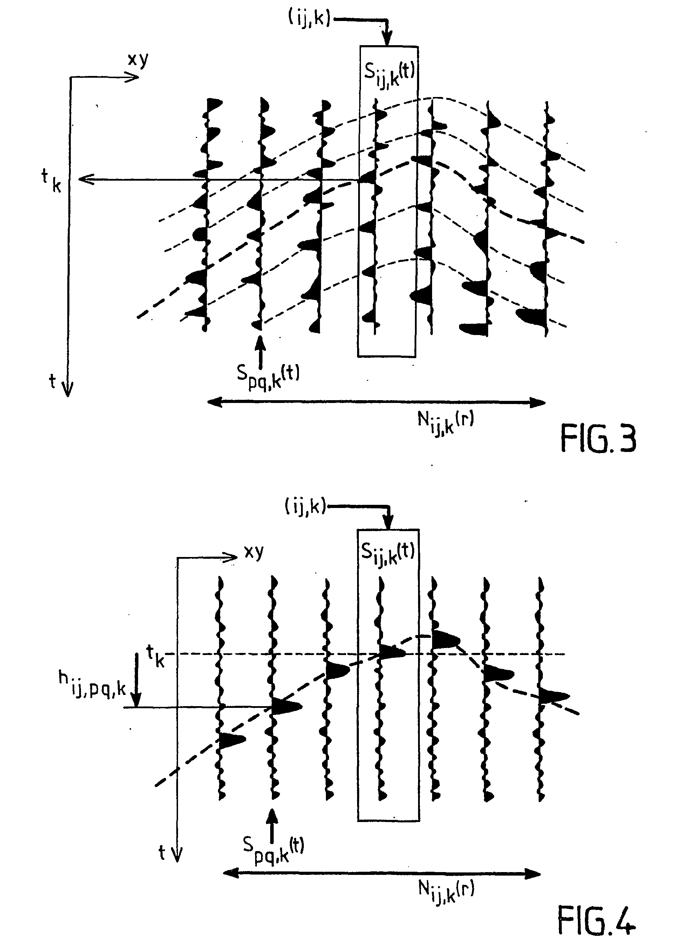

La définition du décalage optimal $h_{ij,pqk}$ de deux traces sismiques locales continues voisines permet d'obtenir une première approximation des horizons passant par cette trace sismique locale continue de référence $S_{ij,k}(t)$, comme représenté aux figures 3 à 5. Contrairement à l'art existant, le fait d'utiliser des décalages optimaux qui ne sont pas contraint à être un multiple entier du pas d'échantillonnage suivant l'axe vertical permet d'éviter des erreurs connues sous le nom de «aliasing».

Sur ces figures 3 à 5, on définit un voisinage conditionnel $N_{ij,k}(r)$ de la trace sismique continue locale de référence $S_{ij,k}(t)$ qui est un sous-voisinage du voisinage initial des traces sismiques locales continues retenues pour le calcul de corrélation et de définition des décalages optimaux. Le voisinage conditionnel $N_{ij,k}(r)$ est choisi de manière que, pour toute trace sismique continue locale $S_{pq,k}(t)$ appartenant à $N_{ij,k}(r)$, le décalage optimal $h_{ij,pq,k}$ correspondant est tel que la corrélation $R_{ij,pq,k}(h_{ij,pq,k})$ entre $S_{ij,k}(t)$ et $S_{pq,k}(t)$ est supérieure à un seuil prédéterminé r compris entre 0 et 1.

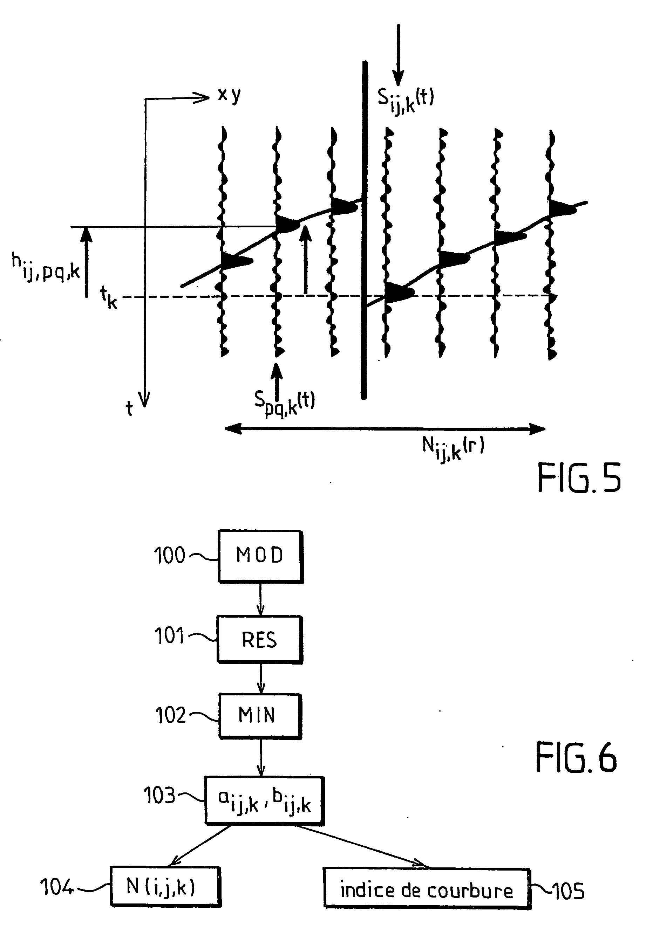

Comme on le voit sur la figure 5, la fixation du seuil r permet également d'englober dans un voisinage conditionnel une discontinuité ou une faille géologique, ce qui constitue un avantage important par rapport à l'art antérieur.

Les dispositions précitées fournissent ainsi une modélisation continue permettant la mise en oeuvre de l'invention.

Sur la figure 6, la modélisation numérique décrite en référence aux figures 1 à 5 est effectuée à l'étape 100 pour mettre en oeuvre un procédé selon l'invention.

Après cette étape 100 de modélisation numérique, on définit à l'étape 101, pour chaque trace sismique locale continue $S_{pq,k}(t)$ du voisinage conditionnel $N_{ij,k}(r)$ une valeur de résidu par rapport à ladite trace sismique locale continue $S_{ij,k}(t)$ centrale de référence comportant des coefficients paramétriques.

La valeur de résidu $\rho_{ij,pq,k}$ choisie traduit l'écart entre l'horizon à la verticale du geophone Gpq et le plan tangent a l'horizon à la verticale du géophone $G_{ij}$.

A titre d'exemple non limitatif, on peut définir comme valeur de résidu une valeur absolue de forme différentielle paramétrique, du genre :

$\rho_{ij,pq,k} = |a_{ij,k} \cdot (p-i) + b_{ij,k} \cdot (q-j) - h_{ij,pq,k}|$, où $a_{ij,k}$ et $b_{ij,k}$ sont des paramètres et $h_{ij,pq,k}$ est le décalage optimal retenu entre la trace sismique locale continue $S_{ij,k}(t)$ "centrale" et une trace locale sismique locale continue $S_{pq,k}(t)$ voisine.

Après avoir défini l'ensemble des résidus sur le voisinage conditionnel $N_{ij,k}(r)$, on détermine les paramètres $a_{ij,k}$ et $b_{ij,k}$ qui correspondent à une minimisation d'ensemble des résidus $\rho_{ij,pq,k}$ sur le voisinage conditionnel à l'étape 102. Le critère de minimisation choisi est arbitraire, et peut par exemple comporter une minimisation d'une somme de puissance supérieure à 1 des résidus, de la forme

$$C^{\alpha}(i,j,k) = \sum_{p,q} (\rho_{ij,pq,k})^{\alpha} \quad ,$$

où n est une puissance réelle positive supérieure à 1.

Le cas échéant, chaque terme $(\rho_{ij,pq,k})^{\alpha}$ de cette somme peut être pondérée par un facteur fonction croissante du coefficient de corrélation $P_{ij,pq,k}(h_{ij,pq,k})$.

La minimisation effectuée à l'étape 102 produit comme résultat à l'étape 103 la meilleure estimation des coefficients $a_{ij,k}$ et $b_{ij,k}$ qui sont les coefficients directeurs de l'horizon passant par le point de coordonnées horizontales i,j et de coordonnée temporelle ou de profondeur k.

A l'étape 104, selon une première variante de l'invention, on détermine les vecteurs unitaires normaux à l'horizon passant par le point de coordonnées spatiales i, j et de coordonnée temporelle ou de profondeur k par des formules de type connu :

$$N^x(i,j,k) = \frac{a_{ij,k}}{\sqrt{(a_{ij,k})^2 + (b_{ij,k})^2 + 1}}$$

$$N^y(i,j,k) = \frac{b_{ij,k}}{\sqrt{(a_{ij,k})^2 + (b_{ij,k})^2 + 1}}$$

$$N^t(i,j,k) = \frac{1}{\sqrt{(a_{ij,k})^2 + (b_{ij,k})^2 - 1}}$$

Le vecteur unitaire normal ainsi obtenu ou tout vecteur qui lui est parallèle permet une visualisation sur écran plus efficace que les visualisations de l'art antérieur, de manière à révéler les paramètres sismiques et les profils des horizons géologiques avec un contraste amélioré par rapport à l'art antérieur.

Pour une autre variante de l'invention à l'étape 105, on choisit comme indice de courbure de l'horizon au point de coordonnées spatiales i, j et de coordonnée temporelle ou de profondeur k une fonction croissante des résidus comportant les coefficients $a_{ij,k}$ et $b_{ij,k}$ déterminés à l'étape 103.

On peut notamment utiliser comme indicateur ou indice de courbure le critère de minimisation

$$C^{\alpha}(i,j,k) \;=\; \sum_{p,q} (\rho_{ij,pq,k})^{\alpha}$$

utilisé pour calculer les coefficients paramétriques $a_{ij,k}$ et $b_{ij,k}$ déterminés à l'étape 103.

On peut également utiliser sans sortir du cadre de la présente invention, toute autre fonction croissante des résidus sur le voisinage conditionnel $N_{ij,k}(r)$.

En effet, dans le cas où l'horizon est parfaitement plan au voisinage du point de coordonnées spatiales i,j et de coordonnée temporelle ou de profondeur k, toute fonction croissante des résidus sera égale à zéro et l'indice de courbure locale sera par conséquent également égal à zéro.

Au contraire, dans le cas où l'horizon au point de coordonnées spatiales i,j et de coordonnée temporelle ou de profondeur k n'est pas plan, l'indice de courbure calculé à l'étape 105 du procédé selon l'invention fournit une indication ou une mesure de la différence entre l'horizon considéré et le plan localement osculateur au point de coordonnées spatiales i,j et de coordonnée temporelle ou de profondeur k.

L'invention permet également par le calcul de l'indice de courbure et sa représentation graphique sur un écran d'améliorer le contraste des mesures sismiques fournies par les géophones sous forme de matrice sismique tridimensionnelle et d'éviter ainsi des mesures sismiques additionnelles jugées au voisinage de discontinuités ou de failles géologiques.

La mise en oeuvre préférée d'un procédé selon l'invention consiste à utiliser un dispositif pour la mise en oeuvre du procédé contenant un produit-programme d'ordinateur exécutant les étapes du procédé selon l'invention décrites en référence aux figures 1 à 6.

A cet effet, le dispositif selon l'invention est muni de moyens de mémorisation appropriés pour mémoriser et calculer les éléments successivement utilisés dans le procédé selon l'invention.

De préférence, la mise en oeuvre du procédé selon l'invention s'effectue sur une station de travail de calculs sismiques en chargeant un produit-programme selon l'invention comportant des éléments de codes de programme pour exécuter les étapes du procédé selon l'invention.

Le produit-programme peut comporter des éléments de codes de programme relatifs aux étapes 100, 101, 102, 103 et 104 décrites en référence à la figure 6.

Alternativement, le produit-programme selon l'invention peut comporter les éléments de codes de programme pour exécuter les étapes 100, 101, 102, 103 et 105 décrites en référence à la figure 6.

Selon d'autres variantes, un produit-programme d'ordinateur selon l'invention peut également comporter des éléments de codes de programme pour exécuter au moins l'ensemble des étapes de procédé décrites en référence à la figure 6.

**Revendications**

1. Procédé pour déterminer localement la forme des horizons géologiques, dans lequel on construit une fonction continue $S_{ij,k}(t)$ par interpolation ou approximation des traces sismiques discrètes d'une matrice sismique tridimensionnelle, ladite fonction $S_{ij,k}(t)$ étant désignée comme "trace sismique locale continue", comportant les étapes suivantes :

   a). utiliser comme décalage optimal de deux traces sismiques locales continues voisines, la valeur de décalage rendant maximale leur fonction de corrélation, ce décalage optimal n'étant pas contraint à être un multiple entier du pas d'échantillonnage vertical ;
   b). retenir comme voisinage conditionnel d'une trace sismique locale continue "centrale" $S_{ij,k}(t)$ le sous-voisinage consistant en des traces voisines $S_{pq,k}(t)$ correspondant à des décalages optimaux $h_{ij,pq,k}$ associés à des corrélations $R_{ij,pq,k}(h_{ij,pq,k})$ supérieures à un seuil prédéterminé compris entre 0 et 1 ; **caractérisé par le fait que** le procédé comporte en outre les étapes suivantes :
   c). définir pour chaque trace sismique locale continue $S_{pq,k}(t)$ du voisinage conditionnel une valeur de résidu par rapport à ladite trace sismique locale continue "centrale" $S_{ij,k}(t)$ comportant des coefficients paramétriques ;
   d). déterminer les coefficients paramétriques $a_{ij,k}$ et $b_{ij,k}$ par minimisation d'ensemble des résidus sur le voisinage conditionnel.

2. Procédé selon la revendication 1, dans lequel les valeurs de résidu de l'étape c) sont des valeurs absolues de forme différentielle paramétrique, par exemple $|a_{ij,k} \cdot (pi) + b_{ij,k} \cdot (q-j) - h_{ij,pq,k}|$ , où $a_{ij,k}$ et $b_{ij,k}$ sont les paramètres et $h_{ij,pq,k}$ est le décalage optimal retenu entre la trace sismique locale continue $S_{ij,k}(t)$ "centrale" et une trace locale sismique locale continue $S_{pq,k}(t)$ voisine.

3. Procédé selon la revendication 1 ou la revendication 2, dans lequel la minimisation d'ensemble des résidus $\rho_{ij,pq,k}$ sur le voisinage conditionnel comporte une minimisation d'une somme de puissances des résidus, de la forme

$$C^{\alpha}(i,j,k) = \sum_{p,q} (\rho_{ij,pq,k})^{\alpha} \ ,$$

où $\alpha$ est une puissance supérieure à 1.

4. Procédé selon la revendication 1, dans lequel les coefficients $a_{ij,k}$ et $b_{ij,k}$ déterminés à l'étape b) sont utilisés pour définir un vecteur unitaire N(ij,k) de coordonnées $N^x(i,j,k)$ , $N^y(i,j,k)$ , $N^t(i,j,k)$ , par exemple de la forme:

$$N^x(i,j,k) = \frac{a_{ij,k}}{\sqrt{(a_{ij,k})^2 + (b_{ij,k})^2 + 1}}$$

$$N^y(i,j,k) = \frac{b_{ij,k}}{\sqrt{(a_{ij,k})^2 + (b_{ij,k})^2 + 1}}$$

$$N^t(i,j,k) = \frac{1}{\sqrt{(a_{ij,k})^2 + (b_{ij,k})^2 - 1}}$$

et dans lequel on choisit ce vecteur unitaire comme vecteur unitaire normal (orthogonal) à l'horizon du noeud (i, j, k).

5. Procédé selon la revendication 4, dans lequel on utilise l'ensemble des vecteurs unitaires normaux N(i, j, k) pour définir le champ des vecteurs unitaires normaux, en vue de l'affichage sur écran des profils des horizons sismiques.

6. Procédé selon l'une quelconque des revendications 1 à 3, dans lequel on choisit comme indice de courbure une fonction croissante des résidus comportant les coefficients paramétriques déterminés à l'étape d).

7. Dispositif pour la mise en oeuvre du procédé selon l'une quelconque des revendications 1 à 4, comportant des moyens pour utiliser comme décalage optimal de deux traces sismiques locales continues voisines la valeur de décalage rendant maximale leur fonction de corrélation, des moyens pour retenir comme voisinage conditionnel d'une trace sismique locale continue "centrale" $S_{ij,k}(t)$ le sous-voisinage consistant en des traces voisines $S_{pq,k}(t)$ correspondant à des décalages optimaux associes à des corrélations $R_{ij,pq,k}(h)$ supérieures à un seuil prédéterminé compris entre 0 et 1 **caractérisé par le fait que** le dispositif comporte en outre des moyens pour définir pour chaque trace sismique locale continue $S_{pq,k}(t)$ du voisinage conditionnel une valeur de résidu par rapport à ladite trace sismique locale continue "centrale" $S_{ij,k}(t)$ comportant des coefficients paramétriques et des moyens pour déterminer les coefficients paramétriques par minimisation d'ensemble des résidus sur le voisinage conditionnel.

8. Dispositif selon la revendication 7, comportant des moyens de mémorisation et des moyens de visualisation de paramètres sismiques déterminés à l'aide du procédé selon l'une quelconque des revendications 1 à 6.

9. Produit-programme d'ordinateur, comportant des éléments de code de programme pour exécuter les étapes du procédé selon l'une quelconque des revendications 1 à 6 lorsque ledit programme est exécuté par un ordinateur.

**Claims**

1. Method for locally determining the shape of geological horizons, wherein a continuous function $S_{ij,k}(t)$ is constructed by interpolation or approximation of the discrete seismic traces of a three-dimensional seismic matrix, with said function $S_{ij,k}(t)$ being termed a "continuous local seismic trace", comprising the following steps:

a) using, as the optimum offset of two adjacent continuous local seismic traces, the offset value for which their correlation is at a maximum, this optimum offset not being restricted to an integral multiple of the vertical sampling interval;

b) taking, as the conditional neighbourhood of a "central" continuous local seismic trace $S_{ij,k}(t)$, the sub-neighbourhood consisting of adjacent traces $S_{pq,k}(t)$ corresponding to optimum offsets $h_{ij,pq,k}$ associated with correlations $R_{ij,pq,k}(h_{ij,pq,k})$, which are greater than a predetermined threshold between 0 and 1;

**characterised in that** the method further comprises the following steps:

c) defining, for each continuous local seismic trace $S_{pq,k}(t)$ of the conditional neighbourhood, a residual value based on the aforementioned "central" continuous local seismic trace $S_{ij,k}(t)$, comprising parametric coefficients;

d) determining the parametric coefficients $a_{ij,k}$ and $b_{ij,k}$ by minimising the set of residuals on the conditional neighbourhood.

2. Method according to claim 1, wherein the residual values of step c) are absolute values of parametric-differential form, for example $|a_{ij,k} \cdot (p-i) + b_{ij,k} \cdot (q-j) - h_{ij,pq,k}|$, where $a_{ij,k}$ and $b_{ij,k}$ are the parameters and $h_{ij,pq,k}$ is the optimum offset maintained between the "central" continuous local seismic trace $S_{ij,k}(t)$ and an adjacent continuous local seismic trace $S_{pq,k}(t)$.

3. Method according to either claim 1 or claim 2, wherein the minimisation of the set of residuals $\rho_{ij,pq,k}$ on the conditional neighbourhood comprises a minimisation of a sum of powers of the residuals, of the form

$$C^{\alpha}(i,j,k) = \sum_{p,q} (\rho_{ij,pq,k})^{\alpha} \, ,$$

where $\alpha$ is a power greater than 1.

4. Method according to claim 1, wherein the coefficients $a_{ij,k}$ and $b_{ij,k}$ determined in step b) are used to define a unit vector $N(i,j,k)$ of coordinates $N^x(i,j,k)$, $N^y(i,j,k)$, $N^t(i,j,k)$, for example of the form:

$$N^x(i,j,k) = \frac{a_{ij,k}}{\sqrt{(a_{ij,k})^2 + (b_{ij,k})^2 + 1}}$$

$$N^y(i,j,k) = \frac{b_{ij,k}}{\sqrt{(a_{ij,k})^2 + (b_{ij,k})^2 + 1}}$$

$$N^t(i,j,k) = \frac{1}{\sqrt{(a_{ij,k})^2 + (b_{ij,k})^2 - 1}}$$

and wherein this unit vector is selected as a normal (orthogonal) unit vector to the horizon of the node (i, j, k).

5. Method according to claim 4, wherein the set of normal unit vectors $N(i, j, k)$ is used to define the field of the normal unit vectors, for the display on a screen of the seismic horizon profiles.

6. Method according to any one of claims 1 to 3, wherein an increasing function of the residuals comprising the parametric coefficients determined in step d) is selected as the index of curvature.

7. Device for carrying out the method according to any one of claims 1 to 4, comprising means for the use, as an optimum offset of two adjacent continuous local seismic traces, of the offset value for which their correlation function is at a maximum, means for taking, as the conditional neighbourhood of a "central" continuous local seismic trace

**EP 1 514 137 B1**

$S_{ij,k}(t)$, the sub-neighbourhood consisting of adjacent traces $S_{pq,k}(t)$ corresponding to optimum offsets associated with correlations $R_{ij,pq,k}(h)$ which are greater than a predetermined threshold between 0 and 1, **characterised in that** the device further comprises means for defining, for each continuous local seismic trace $S_{pq,k}(t)$ of the conditional neighbourhood, a residual value based on the aforementioned "central" continuous local seismic trace $Sij,k(t)$, comprising parametric coefficients, and means for determining the parametric coefficients by minimising the set of residuals on the conditional neighbourhood.

8. Device according to claim 7, comprising storage means and visual display means for seismic parameters determined using the method according to any one of claims I to 6.

9. Computer software package, comprising program code elements to carry out the steps of the method according to any one of claims 1 to 6 when said program is executed by a computer.

**Patentansprüche**

1. Verfahren zur lokalen Bestimmung der Form geologischer Horizonte, bei dem man eine zusammenhängende Funktion $S_{ij,k}(t)$ durch Interpolation oder Näherung der diskreten seismischen Spuren einer dreidimensionalen seismischen Matrix konstruiert, wobei die Funktion $S_{ij,k}(t)$ als "zusammenhangende lokale seismische Spur" bezeichnet wird und das Verfahren folgende Schritte umfaßt:

a) Einsetzen des Verschiebungswertes, der die Korrelationsfunktion zweier benachbarter, zusammenhängender lokaler seismischer Spuren maximal werden läßt, als optimale Verschiebung der zwei benachbarten, zusammenhängenden lokalen seismischen Spuren, wobei diese optimale Verschiebung nicht auf ein ganzzahliges Vielfaches des vertikalen Tastabstandes beschränkt ist;
b) Verwenden der Teilumgebung, die aus benachbarten Spuren $S_{pq,k}(t)$ besteht, welche optimalen Verschiebungen $h_{ij,pq,k}$ entsprechen, denen Korrelationen $R_{ij,pq,k}(h_{ij,pq,k})$ zugeordnet sind, welche größer als ein vorbestimmter Schwellwert im Bereich von 0 bis 1 sind, als eingeschränkte Umgebung einer "zentralen" zusammenhängenden lokalen seismischen Spur $S_{ij,k}(t)$;
**dadurch gekennzeichnet, daß** das Verfahren ferner die folgenden Schritte umfaßt:
c) Festlegen eines Restwertes für jede zusammenhängende lokale seismische Spur $S_{pq,k}(t)$ der eingeschränkten Umgebung relativ zur "zentralen" zusammenhängenden lokalen seismischen Spur $S_{ij,k}(t)$, der parametrische Koeffizienten umfaßt;
d) Bestimmen der parametrischen Koeffizienten $a_{ij,k}$ und $b_{ij,k}$ durch Minimierung der Gruppe der Reste für die eingeschränkte Umgebung.

2. Verfahren nach Anspruch 1, bei dem die Restwerte aus dem Schritt c) absolute Werte in differentieller parametrischer Form sind, z. B. $|a_{ij,k} \cdot (p-1) + b_{ij,k} \cdot (q-j) - h_{ij,k}|$, worin $a_{ij,k}$ und $b_{ij,k}$ die Parameter sind und $h_{ij,pq,k}$ die erhaltene optimale Verschiebung zwischen der "zentralen" zusammenhängenden lokalen seismischen Spur $S_{ij,k}(t)$ und einer benachbarten zusammenhängenden lokalen seismischen Spur $S_{pq,k}(t)$ ist.

3. Verfahren nach Anspruch 1 oder Anspruch 2, bei dem die Minimierung der Gruppe der Reste $\rho_{ij,pq,k}$ in der eingeschränkten Umgebung eine Minimierung einer Summe von Potenzen der Reste mit der Formel

$$C^\alpha(i,j,k) = \sum_{p,q} (\rho_{ij,pq,k})^\alpha$$

umfaßt, worin $\alpha$ eine Potenz größer 1 ist.

4. Verfahren nach Anspruch 1, bei dem die im Schritt b) ermittelten Koeffizienten $a_{ij,k}$ und $b_{ij,k}$ dazu verwendet werden, einen Einheitsvektor $N(i,j,k)$ mit den Koordinaten $N^x(i,j,k)$, $N^y(i,j,k)$, $N^t(i,j,k)$, beispielsweise der Form

$$N^x(i,j,k) = \frac{a_{ij,k}}{\sqrt{(a_{ij,k})^2 + (b_{ij,k})^2 + 1}}$$

**10**

$$N^y(i,j,k) = \frac{b_{ij,k}}{\sqrt{(a_{ij,k})^2 + (b_{ij,k})^2 + 1}}$$

$$N^t(i,j,k) = \frac{1}{\sqrt{(a_{ij,k})^2 + (b_{ij,k})^2 - 1}}$$

festzulegen, und bei dem man diesen Einheitsvektor als zum Horizont des Knotens (i, j, k) normalen (orthogonalen) Einheitsvektor wählt.

5. Verfahren nach Anspruch 4, bei dem man die Gruppe der Normal-Einheitsvektoren N(i, j, k) verwendet, um das Normal-Einheitsvektoren-Feld im Hinblick auf die Bildschirmanzeige der Profile der seismischen Horizonte festzulegen.

6. Verfahren nach einem der Ansprüche 1 bis 3, bei dem man als Krümmungsindex eine steigende Funktion der Reste wählt, welche die im Schritt d) ermittelten parametrischen Koeffizienten umfassen.

7. Vorrichtung zur Durchführung des Verfahrens nach einem der Ansprüche 1 bis 4, mit Mitteln, um als optimale Verschiebung zweier benachbarter zusammenhängender lokaler seismischer Spuren den Verschiebungswert einzusetzen, der deren Korrelationsfunktion maximal werden läßt, Mitteln, um die Teilumgebung, die aus benachbarten Spuren $S_{pq,k}(t)$ besteht, welche optimalen Verschiebungen entsprechen, denen Korrelationen $R_{ij,pq,k}(h)$ zugeordnet sind, welche größer als ein vorbestimmter Schwellwert im Bereich von 0 bis 1 sind, als eingeschränkte Umgebung einer "zentralen" zusammenhängenden lokalen seismischen Spur $S_{ij,k}(t)$ zu verwenden, **dadurch gekennzeichnet, daß** die Vorrichtung ferner umfaßt: Mittel zum Festlegen eines Restwertes für jede zusammenhängende lokale seismische Spur $S_{pq,k}(t)$ der eingeschränkten Umgebung relativ zur "zentralen" zusammenhängenden lokalen seismischen Spur $S_{ij,k}(t)$, der parametrische Koeffizienten umfaßt, und Mittel zum Bestimmen der parametrischen Koeffizienten durch Minimierung der Gruppe der Reste für die eingeschränkte Umgebung,

8. Vorrichtung nach Anspruch 7, mit Mitteln zur Speicherung und Mitteln zur Anzeige von seismischen Parametern, die mit Hilfe des Verfahrens nach einem der Ansprüche 1 bis 6 ermittelt wurden.

9. Computerprogrammprodukt mit Programmcode-Elementen zum Ausführen der Schritte des Verfahrens nach einem der Ansprüche 1 bis 6 bei der Ausführung des Programms auf einem Computer.

FIG.1

FIG.2

FIG.3

FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6151555 A
- WO 9964896 A
- US 5625171 A